# EUROPEAN PATENT SPECIFICATION

(11) **EP 2 378 434 B1**
(45) Date of publication and mention of the grant of the patent: **03.09.2014**
(21) Application number: 09835990.4
(22) Date of filing: 10.09.2009
(51) Int. Cl.: G06F 17/30, G06F 11/20

(54) **MEHTOD AND DEVICE OF MULTIPLE DISKS GROUPING HOT STANDBY IN DISTRIBUTED FILE SYSTEM**
VERFAHREN UND VORRICHTUNG FÜR DAUERBETRIEBENEN STANDBY-MODUS MEHRERER PLATTENGRUPPEN IN EINEM VERTEILTEN DATEISYSTEM
PROCÉDÉ ET DISPOSITIF DE RÉSERVE IMMÉDIATE PAR GROUPEMENT DE DISQUES MULTIPLES DANS UN SYSTÈME DE FICHIERS RÉPARTI

(30) Priority: 31.12.2008 CN 200810246807
(43) Date of publication of application: 19.10.2011
(73) Proprietor: ZTE Corporation, Shenzhen, Guangdong 518057 (CN)
(72) Inventor: ZHU, Hongjun, Shenzhen Guangdong 518057 (CN); LIU, Yang, Shenzhen Guangdong 518057 (CN)
(74) Representative: Jansen, Cornelis Marinus
(86) International application number: PCT/CN2009/073866
(87) International publication number: WO 2010/075703

(56) References cited:
- WO-A2-2008/036319
- CN-A- 101 441 668
- CN-C- 100 341 255
- CN-C- 100 363 900
- US-A1- 2005 144 514
- US-B1- 6 405 284

## Description

### Field of the Invention

The present invention relates to a method and apparatus of multiple disks grouping hot standby in a distributed file system (abbreviated as DFS).

### Background of the Invention

The DFS generally includes a plurality of file access servers (abbreviated as FAS), with each FAS providing external file read and write function of the file system and at the same time each FAS managing a plurality of disks, wherein the state of the disks are reported by the FAS to a file locating register (abbreviated as FLR) periodically and the disk discovery function is also implemented by the FAS. In the prior art, disk backup method is generally used to improve system reliability and to reduce the effect of FAS failure to the overall system, that is, when a single disk fails, a backup disk is used to continue to provide the service. As to a distributed file system, since each FAS manages a plurality of disks while there is certain coupling among the disks managed by each FAS, if only disk backup mechanism is used, then when the FAS fails, the main standby disk on this FAS will fail simultaneously, thus causing the files on this FAS not be able to be provided for the access users, which results in reducing the quality of system file service.

From the document US2005144514 it is known a distributed file storage system formed by a plurality of disk arrays, wherein a disk drive hot swapping mechanism is utilized for replacing failed disk drives, the disks being organized in parity groups allowing total parity group distribution within each disk array of the distributed file system, wherein newly added disks are incorporated into existing parity groups.

From the document US6405284 it is known a distributed data disk storage system employing a hot standby disk replacement mechanism based on mirroring partners, the multiple disks being divided into plural fail groups so as to attain a multi-disk failure resistance, wherein new disks are added to the system in accordance with the broken partners' group allocation.

### Summary of the Invention

In light of this, the main object of the present invention, which is defined in detail in the appended independent claims, is to provide a method and apparatus for multiple disks grouping hot standby in a distributed file system, which is capable of improving the reliability of the DFS effectively.

In order to achieve the above object, a method for multiple disks grouping hot standby in a distributed file system is provided according to one aspect of the present invention, which method for multiple disks grouping hot standby in a distributed file system according to the present invention comprises:
grouping disks by taking a file access server as an object and establishing the hot standby relation among disks by taking a group as an object;
judging whether a powered-up disk is a new disk when detecting that the disk is powered-up, wherein if yes, the hot standby relation of said new disk is determined according to the group where said new disk is located and a backup file is loaded on said new disk;
if not a new disk, judging whether the group where said powered-up disk is currently located is consistent with a previous group, wherein if consistent, the previous hot standby relation of said powered-up disk is restored and it is judged whether the file content of said powered-up disk is identical to the file content in its hot standby disk, wherein if identical, it does not perform any process, and if not identical, a backup file is re-loaded on said powered-up disk; and
if not consistent, re-establishing hot standby relation for said powered-up disk according to the group where said powered-up disk is currently located, and re-loading a backup file on said powered-up disk.

Preferably, grouping disks by taking a file access server as an object in particular is as follows:
configuring physical information of the position, logic unit information and grouping number information for said file access server and establishing the corresponding relation between disk parameters and the physical information of the position, logic unit information and grouping number information of said file access server.

Preferably, said physical information of the position includes the information of the bracket, frame and socket plate where said file access server is located; said logic unit information includes the information of the CPU, inside port unit, outside port unit, MAC address, and IP address of said file access server; said disk parameters include a disk data area use identifier, a logic address index number of the disk in said file access server, a disk physical serial number, a disk logic identifier, a disk block check inquiry serial number, the disk heartbeat detection, the disk state, the disk total capacity, the disk idle capacity, the amount of data read from the disk during a certain period of time, the amount of data written on the disk during a certain period of time, the report starting time, and the report ending time.

Preferably, establishing the hot standby relation among disks by taking a group as an object in particular is:
setting hot standby numbers for the disks in said group and establishing the dynamic corresponding relation among the disks in the group according to said hot standby numbers.

An apparatus for multiple disks grouping hot standby in a distributed file system is provided according to another aspect of the present invention. The apparatus for multiple disks grouping hot standby in a distributed file system according to the present invention comprises:
a disk grouping unit, configured to grouping disks by taking a file access server as an object;
a hot standby relation static configuring unit, configured to establish the hot standby relation among disks by taking a group as an object;
a monitoring unit, configured to monitor the updating status of the disk;
a new disk detecting unit, configured to judge whether a powered-up disk is a new disk, wherein if yes, it triggers a new disk hot standby relation determining unit, otherwise it triggers a group judging unit;
the new disk hot standby relation determining unit, configured to determine the hot standby relation of said new disk according to the group where said new disk is located and trigger a backup file loading unit;
the group judging unit, configured to judge whether the group where said powered-up disk is currently located is consistent with the previous group, wherein if consistent, it triggers a hot standby relation restoring and file content judging unit, and if not consistent, it triggers a hot standby relation updating unit;
the hot standby relation restoring and file content judging unit, configured to restore the previous hot standby relation of said powered-up disk and judging whether the file content of said powered-up disk is identical to the file content in its hot standby disk, wherein if identical, it does not perform any process, and if not identical, it triggers the backup file loading unit;
the hot standby relation updating unit, configured to re-establish hot standby relation for said powered-up disk according to the group where said powered-up disk is currently located, and triggers the backup file loading unit; and
the backup file loading unit, configured to load a backup file on said powered-up disk.

Preferably, said disk grouping unit grouping disks by taking a file access server as an object in particular is:
configuring physical information of the position, logic unit information and grouping number information for said file access server and establishing the corresponding relation between disk parameters and the physical information of the position, logic unit information and grouping number information of said file access server.

Preferably, said physical information of the position includes the information of the bracket, frame and socket plate where said file access server is located; said logic unit information includes the information of the CPU, inside port unit, outside port unit, MAC address, and IP address of said file access server; said disk parameters include a disk data area use identifier, a logic address index number of the disk in said file access server, a disk physical serial number, a disk logic identifier, a disk block check inquiry serial number, the disk heartbeat detection, the disk state, the disk total capacity, the disk idle capacity, the amount of data read from the disk during a certain period of time, the amount of data written on the disk during a certain period of time, the report starting time, and the report ending time.

Preferably, said hot standby relation static configuring unit establishing hot standby relation among disks by taking a group as an object in particular is:
setting hot standby numbers for the disks in said group and establishing the dynamic corresponding relation among the disks in the group according to said hot standby numbers.

A method for multiple disks grouping hot standby in a distributed file system is provided according to yet another aspect of the present invention. The method for multiple disks grouping hot standby in a distributed file system according to the present invention comprises: grouping disks by taking a file access server as an object and establishing hot standby relation among disks by taking a group as an object; and judging whether a powered-up disk is a new disk, wherein if yes, the hot standby relation of said new disk is determined according to the group where said new disk is located and a backup file is loaded on said new disk, otherwise the hot standby relation of said powered-up disk is configured according to whether the group where said powered-up disk is currently located is consistent with the previous group.

Preferably, in the case that said powered-up disk is not a new disk, the step of configuring the hot standby relation of said powered-up disk according to whether the group where said powered-up disk is currently located is consistent with the previous group comprises: in the case that the group where said powered-up disk is located is consistent with the previous group, the previous hot standby relation of said powered-up disk is restored and it is judged whether the file content of said powered-up disk is identical to the file content in its hot standby disk, wherein if identical, it does not perform any process, and if not identical, a backup file is re-loaded on said powered-up disk; and in the case that the group where said powered-up disk is currently located is not consistent with the previous group, hot standby relation for said powered-up disk is re-established according to the group where said powered-up disk is currently located and a backup file is re-loaded on said powered-up disk.

An apparatus for multiple disks grouping hot standby in a distributed file system is provided according to yet another aspect of the present invention. The apparatus for multiple disks grouping hot standby in a distributed file system according to the present invention comprises: a pre-configuring unit, configured to grouping disks by taking a file access server as an object and establishing the hot standby relation among disks by taking a group as an object; a new disk detecting unit, configured to judge whether a powered-up disk is a new disk, wherein if yes, it triggers a new disk hot standby relation determining unit, otherwise it triggers an old disk hot standby relation configuring unit; said new disk hot standby relation determining unit, configured to determine the hot standby relation of said new disk according to the group where said new disk is located and load a backup file on said new disk; and said old disk hot standby relation configuring unit, configured to configure the hot standby relation of said powered-up disk according to whether the group where said powered-up disk is currently located is consistent with the previous group.

Preferably, said old disk hot standby relation configuring unit includes: a group judging subunit, configured to judge whether the group where said powered-up disk is currently located is consistent with the previous group, wherein if consistent, it triggers a hot standby relation restoration subunit, and if not consistent, it triggers a hot standby relation updating subunit; said hot standby relation restoration subunit, configured to restore the previous hot standby relation of said powered-up disk and judge whether the file content of said powered-up disk is identical to the file content in its hot standby disk, wherein if identical, it does not perform any process, and if not identical, a backup file is re-loaded on said powered-up disk; and said hot standby relation updating subunit, configured to re-establish hot standby relation for said powered-up disk according to the group where said powered-up disk is currently located and re-load a backup file on said powered-up disk.

In the present invention, the FAS is the basis of grouping the disks, in which all the disks in one FAS are designed in one group and are hot standby in group unit, such that the overall DFS would not be affected no matter if it is a single disk or a single FAS to have a problem. Additionally, when performing hot standby in group unit, the hot standby relation among disks in one group is not fixed while it dynamically changes according to the updating condition of the disks. When one disk in the FAS is powered up, the present invention is capable of automatically generating the hot standby relation of the newly powered-up disk according to the hot standby relation among the previous groups, thus making the hot standby relation among disks in the present invention firmer. The present invention greatly improves the reliability of DFS data.

### Brief Description of the Drawings

The drawings illustrated here provide a further understanding of the present invention and form a part of the present application. The exemplary embodiments and the description thereof are used to explain the present invention without unduly limiting the scope of the present invention, in which:
Fig. 1A is a schematic diagram of the flow of a method for multiple disks grouping hot standby in a distributed file system in the embodiments of the present invention;
Fig. 1B is a schematic diagram of the detailed flow of the method for multiple disks grouping hot standby in a distributed file system in the embodiments of the present invention;
Fig. 2A is a structural block diagram of an apparatus for multiple disks grouping hot standby in a distributed file system in the embodiments of the present invention;
Fig. 2B is a detailed structural block diagram of an old disk hot standby relation configuring unit of the apparatus for multiple disks grouping hot standby in a distributed file system in the embodiments of the present invention; and
Fig. 2C is a detailed structural block diagram of the apparatus for multiple disks grouping hot standby in a distributed file system in the embodiments of the present invention.

### Detailed Description of Embodiments

### Function Summary

The basic concept of the present invention is: taking the FAS as basis of grouping disks, wherein all the disk in one FAS are designed in one group and the hot standby are performed by taking the group as a unit, such that the overall DFS would not be affected no matter it is a single disk or a single FAS to have a problem. Additionally, when performing hot standby by taking the group as a unit, the hot standby relation among disks in one group is not fixed but dynamically changed according to the updating status of the disks. When one disk in the FAS is powered up, the hot standby relation of the newly powered-up disk is automatically generated according to the hot standby relation among the previous groups, so as to make the hot standby relation among disks firmer and make the service of the DFS for providing data files to users more reliable and not easy to be interrupted.

For better understanding of the objects, technical solutions and advantages of the present invention, the present invention will now be further described in detail by way of embodiments and with reference to the drawings.

### Method Embodiments

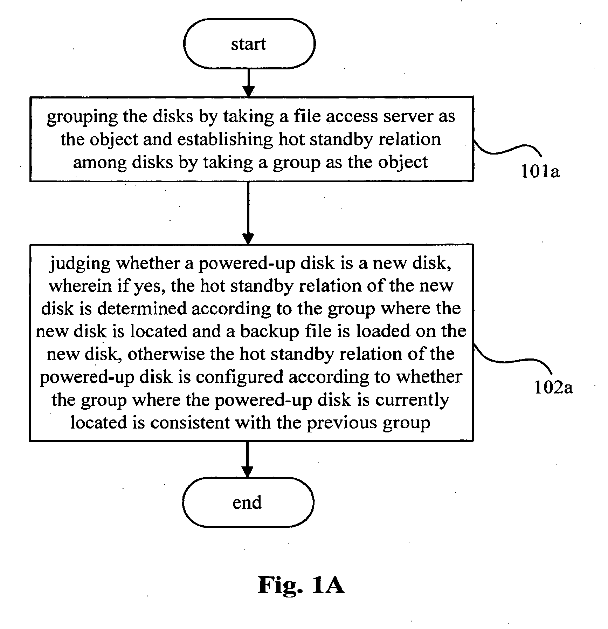

Fig. 1A is a schematic diagram of the flow of a method for multiple disks grouping hot standby in a distributed file system in the embodiments of the present invention. As shown in Fig. 1A, this method comprises:
Step 101a: grouping the disks by taking a file access server as the object and establishing hot standby relation among disks by taking a group as the object; and
Step 102a: judging whether a powered-up disk is a new disk, wherein if yes, the hot standby relation of the new disk is determined according to the group where the new disk is located and a backup file is loaded on the new disk, otherwise the hot standby relation of the powered-up disk is configured according to whether the group where the powered-up disk is currently located is consistent with the previous group.

In step 102a, in the case that the powered-up disk is not a new disk, the step of configuring the hot standby relation of said powered-up disk according to whether the group where the powered-up disk is currently located is consistent with the previous group includes: in the case that the powered-up disk is consistent with the previous group, restoring the previous hot standby relation of the powered-up disk and judging whether the file content of the powered-up disk is identical to the file content in its hot standby disk, wherein if identical, then no process is performed, and if not identical, a backup file is re-loaded on the powered-up disk; and in the case that the group where the powered-up disk is currently located is not consistent with the previous group, the hot standby relation is re-established for the powered-up disk according the group where the powered-up disk is currently located and a backup file is re-loaded on the powered-up disk.

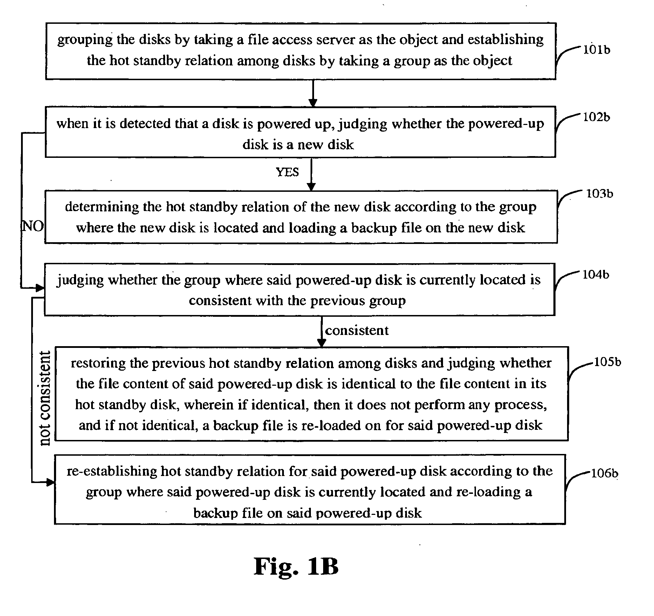

Fig. 1B is a schematic diagram of the detailed flow of the method for multiple disks grouping hot standby in a distributed file system in the embodiments of the present invention. As shown in Fig. 1B, this method comprises:
Step 101b: grouping the disks by taking a file access server as the object and establishing the hot standby relation among disks by taking a group as the object.

Data areas for storing disk information are reserved on the FLR, wherein the disk information can include the basic information of the disk, the information of the FAS which the disk belong to, the hot standby relation among disks in the group, etc. The data areas of the FLR configure the physical information of the position, logic unit information and grouping number information for the FAS, and establish the corresponding relation between disk parameters and the physical information of the position, the logic unit information and the grouping number information of the FAS. Said physical information of the position can include the information of the bracket, frame, socket plate, etc. where said file access server is located; said logic unit information can include the information of the CPU, inside port unit, outside port unit, MAC address, and IP address of the FAS, etc; and said disk parameters can include a disk data area use identifier, a logic address index number of the disk in said file access server, a disk physical serial number, a disk logic identifier, a disk block check inquiry serial number, the disk heartbeat detection, the disk state, the disk total capacity, disk idle capacity, the amount of data read from disk during a certain period of time, the amount of data written on disk during a certain period of time, the report starting time, the report ending time, etc.

In the embodiments of the present invention, all the disks in one FAS are taken as a group, the hot standby relation is established between two groups, hot standby numbers are set for the disks in said groups, and the dynamic corresponding relation is established among groups according to said hot standby numbers. Although there is hot standby relation between two groups, the hot standby relation among disks in one group is dynamic, in which the hot standby numbers in each group are set according to the maximum number of disks supported by the FAS so as to be able to perform dynamic adjustment according to the hot standby method provided by the embodiments of the present invention when the disks in the FAS are powered-up. In the embodiments of the present invention, identical group numbers are allocated to two groups which are hot standby with each other, so as to facilitate the identification. That is to say, in the embodiments of the present invention, the hot standby relation is limited to the level of a group, and the hot standby relation among disks in one group can be set arbitrarily.
Step 102b: When it is detected that a disk is powered up, judging whether the powered-up disk is a new disk, wherein if yes, step 103b is performed, otherwise step 104b is performed.

In the embodiments of the present invention, the FAS will detect the disk updating status in this FAS periodically. When a disk is inserted to be powered up or a disk is plugged out or broken, it will report the detection results to the FLR. The FLR will perform operations on the data areas of the FLR, such as modifying, adding, or deleting the relevant information of the disk, according to the reported results of the FAS. Since the embodiments of the present invention is directed to a method for dynamic hot standby of disks, the emphasis will be put on describing the power-up condition of disks. As to the case that the disk escapes from the FLR, the relevant configuration information of the disks will be kept for a period of time. If it is out of a pre-set time period, then the relevant configuration information of disks will be deleted. When there is a disk inserted into the disk socket in the FAS, the FAS will dynamically detect the relevant parameter information of the disk, which includes disk physical serial number, disk total capacity, disk idle capacity, etc.. Relevant description in step 101b can be referred to for the particular parameter information , which will not be described here redundantly. The FAS reports the detected parameter information of the disk. The FLR searches the data areas according to the received disk parameter information and checks whether said disk is a new disk, wherein if yes, then it performs step 103b, otherwise it performs step 104b.
Step 103b: determining the hot standby relation of the new disk according to the group where the new disk is located and loading a backup file on the new disk.

The FLR determines a group which the new disk belongs to according to the FAS which reports the disk parameter information, allocates a hot standby number for the new disk according to said group information, and determines another group which is hot standby with said group mutually. As described above, two groups which are hot standby for each other can be determined by group numbers and it can be determined that there is disk(s) which does not have a hot standby originally in said another group, wherein if there are two said disks, then any one of said disks which do not have a hot standby originally can be chosen to establish hot standby relation with the new disk, and if there is one said disk, then the disk which does not have a hot standby originally is established hot standby relation with the new disk, and if there is no said disk, then no process is performed, wherein the establishment of the hot standby relation is to associate the hot standby number of the disk which does not have a hot standby originally with that of the new disk and store it in the data areas of the FLR. After the hot standby relation has been established, the files in the disk which does not have a hot standby originally are copied into the new disk and the procedure is ended.
Step 104b: judging whether the group where said powered-up disk is currently located is consistent with the previous group, wherein if consistent, it performs step 105b, otherwise it performs step 106b.

The FLR determines the group which said powered-up disk previously belongs to according to relevant parameter information of the disk and determines whether said powered-up disk has changed the FAS, wherein if yes, then this powered-up disk is the one changed from other FAS and step 106b is performed, otherwise this powered-up disk is the one which is re-powered up in the FAS and step 105b is performed.
Step 105b: restoring the previous hot standby relation among disks and judging whether the file content of said powered-up disk is identical to the file content in its hot standby disk, wherein if identical, then it does not perform any process, and if not identical, a backup file is re-loaded on for said powered-up disk.

The previous disk is inserted into the FAS. It is likely in the situation in which due to the facts such as virtual connection of interface, short maintenance, etc., a disk in FAS is temporarily taken out and then re-inserted into the FAS, and at this moment, the FLR checks whether the hot standby relation of this disk still exists, wherein if yes, it checks whether the file content in this disk is consistent with the file content in the hot standby disk, wherein if consistent, then it does not perform any process, otherwise it performs file updating to make the file content in said newly inserted disk be consistent with that in the hot standby disk. If the hot standby relation of said disk does not exist, then the previous hot standby relation of said powered-up disk is restored and it is checked again whether the file content in this disk is consistent with that in the hot standby disk, wherein if consistent, then it does not performs any process, otherwise the updating is performed to have the file content in said newly inserted disk and that in the hot standby disk consistent with each other. The procedure is ended.
Step 106b: re-establishing hot standby relation for said powered-up disk according to the group where said powered-up disk is currently located and re-loading a backup file on said powered-up disk.

When it is determined that the disk newly inserted into the FAS did not belong to this FAS previously, the newly inserted disk is regarded as a new disk to be processed, that is, performing hot standby process according to the manner at step 103b, which will not be described here redundantly. After the process of the disk hot standby relation is completed, the file content in said newly inserted disk and the hot standby disk are updated to be consistent with each other and the previous hot standby configuration information of said powered-up disk is deleted. The procedure is ended.

A computer readable medium is further provided according to the embodiments of the present invention, which computer readable medium is stored thereon with computer executable instruction(s), and when this instruction is executed by a computer or processor, it makes the computer or processor to execute the process of each step as shown in Figs. 1A and 1B, and preferably, one or more of the above embodiments can be executed.

### Apparatus Embodiments

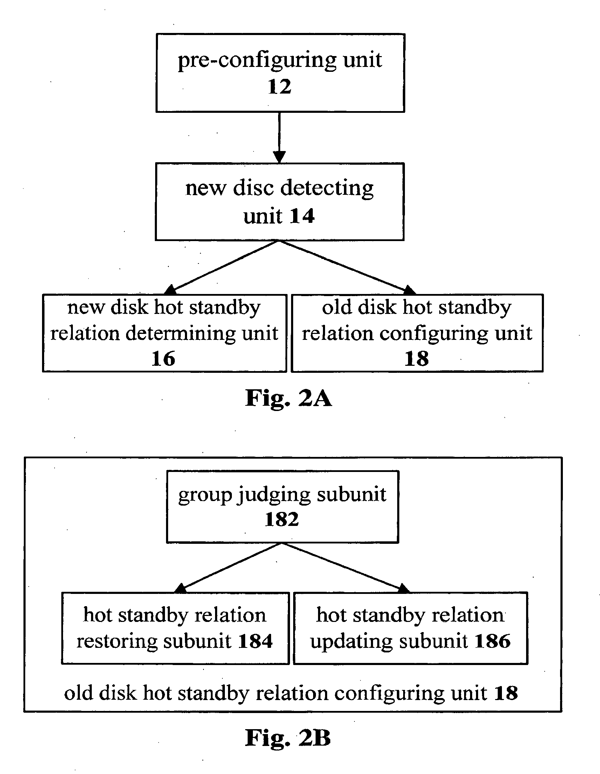

Fig. 2A is a structural block diagram of the apparatus for multiple disks grouping hot standby in a distributed file system in the embodiments of the present invention. As shown in Fig. 2A, the apparatus for multiple disks grouping hot standby in a distributed file system in the embodiments of the present invention comprises: a pre-configuring unit 12 used for grouping the disks by taking a file access server as the object and establishing the hot standby relation among the disks by taking a group as the object; a new disk detecting unit 14 connected to the pre-configuring unit 12, used for judging whether a powered-up disk is a new disk, wherein if yes, it triggers a new disk hot standby relation determining unit 16, otherwise it triggers an old disk hot standby relation configuring unit 18; the new disk hot standby relation determining unit 16 connected to the new disk detecting unit 14, used for determining the hot standby relation of the new disk according to the group where the new disk is located and loading a backup file on the new disk; the old disk hot standby relation configuring unit 18 connected to the new disk detecting unit 14, used for configuring the hot standby relation of the powered-up disk according to whether the group where the powered-up disk is currently located is consistent with the previous group.

Fig. 2B is a detailed structural block diagram of an old disk hot standby relation configuring unit of the apparatus for multiple disks grouping hot standby in a distributed file system in the embodiments of the present invention. As shown in Fig. 2B, the old disk hot standby relation configuring unit 18 includes: a group judging subunit 182 used for judging whether the group where the powered-up disk is currently located is consistent with the previous group, wherein if consistent, it triggers a hot standby relation restoring subunit, and if not consistent, it triggers a hot standby relation updating subunit; a hot standby relation restoring subunit 184 connected to the group judging subunit 182, used for restoring the previous hot standby relation of the powered-up disk and judging whether the file content of the powered-up disk is identical to that in its hot standby disk, wherein if identical, then it does not perform any process, and if not identical, a backup file is re-loaded on the powered-up disk; a hot standby relation updating subunit 186 connected to the group judging subunit 182, used for re-establishing hot standby relation for the powered-up disk according to the group where the powered-up disk is currently located and re-loading a backup file on the powered-up disk.

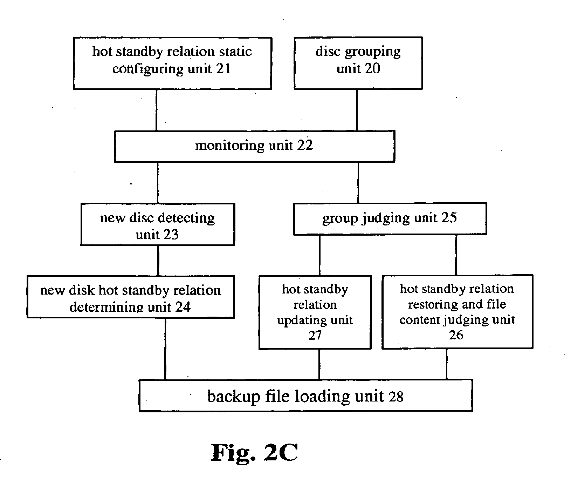

Fig. 2C is a detailed structure block diagram of the apparatus for multiple disks grouping hot standby in a distributed file system in the embodiments of the present invention. As shown in Fig. 2C, the apparatus for multiple disks grouping hot standby in a distributed file system in the embodiments of the present invention comprises: a disk grouping unit 20, a hot standby relation static configuring unit 21, a monitoring unit 22, a new disk detecting unit 23, a new disk hot standby relation determining unit 24, a group judging unit 25, a hot standby relation restoring and file content judging unit 26, a hot standby relation updating unit 27 and a backup file loading unit 28, wherein the disk grouping unit 20 is used for grouping the disks by taking a file access server as the object, i.e., all the disks in one FAS are included in one group. The hot standby relation static configuring unit 21 is used for establishing the hot standby relation among disks by taking a group as the object, i.e., establishing the hot standby relation among groups, but the hot standby corresponding relation among individual disks in one group is not limited and the groups having hot standby relation select the same group number. As to the establishment of hot standby relation, it needs to report the basic parameter information of the disk and the relevant information of the FAS, wherein the hot standby relation is the association relation between the disk and the FAS group and between the disks in two groups. The monitoring unit 22 is used for monitoring the updating status of the disk, and when a disk is powered-up or powered-down, the power up or power down information will be reported. The new disk detecting unit 23 is used for judging whether a powered-up disk is a new disk, wherein if yes, then it triggers the new disk hot standby relation determining unit 24, otherwise it triggers the group judging unit 25. The emphasis of the embodiments of the present invention is the dynamic maintenance of the hot standby relation among disks, and in particular the hot standby relation maintenance when there is a disk powered up, therefore it will focus on the situation that a disk is newly powered up. The new disk hot standby relation determining unit 24 is used for determining the hot standby relation of the said new disk according to the group where said new disk is located and triggering the backup file loading unit 28, and the backup file loading unit 28 copies the files in a disk which is the hot standby object of said new disk into the new disk. The group judging unit 25 is used for judging whether the group where said powered-up disk is currently located is consistent with the previous group, wherein if consistent, it triggers the hot standby relation restoring and file content judging unit 26, and if not consistent, it triggers the hot standby relation updating unit 27. The hot standby relation restoring and file content judging unit 26 is used for restoring the previous hot standby relation of said powered-up disk and judging whether the file content in said powered-up disk is identical to that in its hot standby disk, wherein if identical, it does not perform any process and end the procedure; and if not identical, it triggers the backup file loading unit 28, wherein the backup file loading unit 28 updates the file content in said newly inserted disk and the hot standby disk such that they are consistent with each other. The hot standby relation updating unit 27 is used for re-establishing hot standby relation for said powered-up disk according to the group where said powered-up disk is currently located and triggering the backup file loading unit 28, wherein the backup file loading unit 28 updates the file content in said newly inserted disk and the hot standby disk such that they are consistent with each other. When the previous disk is the one that is in other FAS and is newly inserted into another FAS, the updating action of hot standby relation is basically the same as the hot standby relation update for inserting a new disk. The backup file loading unit 28 is used for loading a backup file on said powered-up disk.

Those skilled in the art should understand that the apparatus for multiple disks grouping hot standby in a distributed file system in the embodiments of the present invention is designed for implementing the above method for multiple disks grouping hot standby in a distributed file system. The implementing functions of each processing unit in the apparatus in Figs. 2A and 2B can be understood by reference to the relevant description shown in Fig. 1A. The implementing functions of each processing unit in the apparatus in Fig. 2C can be understood by reference to the relevant description shown in Fig. 1B. The function of each unit in the apparatus for multiple disks grouping hot standby in a distributed file system in the embodiments of the present invention can be achieved by the programs running on a processor and can also be achieved by particular logic circuits.

In summary, the solutions for multiple disks grouping hot standby in a distributed file system in the embodiments of the present invention are capable of making the hot standby relation among disks firmer and making the service of the DFS providing data files for users more reliable and not easy to be interrupted.

Additionally, the implementation of the present invention does not modify the system architecture and the current process procedure, which is easy to implement and convenient to promote in the technical field and have relatively strong industrial applicability.

What is described above is only the preferred embodiments of the present invention and not intended to limit the protection scope of the present invention.

## Claims

1. A method for performing a hot standby for multiple disks grouping in a distributed file system, comprising:
grouping disks for a file access server and establishing a standby relation between disks in different groups;
the method **characterized by** comprising:
judging whether a powered-up disk is a new disk when detecting that the disk is powered-up, wherein if yes, the hot standby relation of said new disk is determined according to the group where said new disk is located and a backup file is loaded on said new disk;
if not a new disk, judging whether the group where said powered-up disk is currently located is consistent with a previous group, wherein if consistent, the previous hot standby relation of said powered-up disk is restored and it is judged whether the file content of said powered-up disk is identical to the file content in its hot standby disk, wherein if identical, it does not perform any process, and if not identical, a backup file is re-loaded on said powered-up disk; and
if not consistent, re-establishing hot standby relation for said powered-up disk according to the group where said powered-up disk is currently located, and re-loading a backup file on said powered-up disk.

2. The method according to claim 1, **characterized in that** grouping disks by taking a file access server as an object in particular is as follows:
configuring physical information of the position, logic unit information and grouping number information for said file access server and establishing the corresponding relation between disk parameters and the physical information of the position, logic unit information and grouping number information of said file access server.

3. The method according to claim 2, **characterized in that** said physical information of the position includes the information of the bracket, frame and socket plate where said file access server is located; said logic unit information includes the information of the CPU, inside port unit, outside port unit, MAC address, and IP address of said file access server; said disk parameters include a disk data area use identifier, a logic address index number of the disk in said file access server, a disk physical serial number, a disk logic identifier, a disk block check inquiry serial number, the disk heartbeat detection, the disk state, the disk total capacity, the disk idle capacity, the amount of data read from the disk during a certain period of time, the amount of data written on the disk during a certain period of time, the report starting time, and the report ending time.

4. The method according to claim 1, **characterized in that** establishing the hot standby relation among disks by taking a group as an object in particular is:
setting hot standby numbers for the disks in said group and establishing the dynamic corresponding relation among the disks in the group according to said hot standby numbers.

5. An apparatus for performing a hot standby for multiple disks grouping in a distributed file system, comprising:
the apparatus **characterized by** comprising:
a disk grouping unit (20), configured to grouping disks for a file access server;
a hot standby relation static configuring unit (21), configured to establish a hot standby relation between disks in different groups;
a monitoring unit (22), configured to monitor the updating status of the disks;
a new disk detecting unit (14, 23), configured to judge whether a powered-up disk is a new disk, wherein if yes, it triggers a new disk hot standby relation determining unit (16,24), otherwise it triggers a group judging unit (25);
the new disk hot standby relation determining unit (16, 24), configured to determine the hot standby relation of said new disk according to the group where said new disk is located and trigger a backup file loading unit (28);
the group judging unit (25), configured to judge whether the group where said powered-up disk is currently located is consistent with the previous group, wherein if consistent, it triggers a hot standby relation restoring and file content judging unit (26), and if not consistent, it triggers a hot standby relation updating unit (27),
the hot standby relation restoring and file content judging unit (26), configured to restore the previous hot standby relation of said powered-up disk and judging whether the file content of said powered-up disk is identical to the file content in its hot standby disk, wherein if identical, it does not perform any process, and if not identical, it triggers the backup file loading unit;
the hot standby relation updating unit (27), configured to re-establish hot standby relation for said powered-up disk according to the group where said powered-up disk is currently located, and triggers a backup file loading unit (28), and
the backup file loading unit (28), configured to load a backup file on said powered-up disk.

6. The apparatus according to claim 5, **characterized in that** said disk grouping unit grouping disks by taking a file access server as an object in particular is:
configuring physical information of the position, logic unit information and grouping number information for said file access server and establishing the corresponding relation between disk parameters and the physical information of the position, logic unit information and grouping number information of said file access server.

7. The apparatus according to claim 6, **characterized in that** said physical information of the position includes the information of the bracket, frame and socket plate where said file access server is located; said logic unit information includes the information of the CPU, inside port unit, outside port unit, MAC address, and IP address of said file access server; said disk parameters include a disk data area use identifier, a logic address index number of the disk in said file access server, a disk physical serial number, a disk logic identifier, a disk block check inquiry serial number, the disk heartbeat detection, the disk state, the disk total capacity, the disk idle capacity, the amount of data read from the disk during a certain period of time, the amount of data written on the disk during a certain period of time, the report starting time, and the report ending time.

8. The apparatus according to claim 5, **characterized in that** said hot standby relation static configuring unit establishing hot standby relation among disks by taking a group as an object in particular is:
setting hot standby numbers for the disks in said group and establishing the dynamic corresponding relation among the disks in the group according to said hot standby numbers.

9. A method for performing a hot standby for multiple disks grouping in a distributed file system, comprising:
grouping disks for a file access server and establishing a hot standby relation between disks in different groups; and the mehod **characterized by** comprising:
judging whether a powered-up disk is a new disk, wherein if yes, the hot standby relation of said new disk is determined according to the group where said new disk is located and a backup file is loaded on said new disk, otherwise the hot standby relation of said powered-up disk is configured according to whether the group where said powered-up disk is currently located is consistent with a previous group,
wherein in the case that said powered-up disk is not a new disk, the step of configuring the hot standby relation of said powered-up disk according to whether the group where said powered-up disk is currently located is consistent with the previous group comprises:
in the case that the group where said powered-up disk is located is consistent with the previous group, the previous hot standby relation of said powered-up disk is restored and it is judged whether the file content of said powered-up disk is identical to the file content in its hot standby disk, wherein if identical, it does not perform any process, and if not identical, a backup file is re-loaded on said powered-up disk; and
in the case that the group where said powered-up disk is currently located is not consistent with the previous group, hot standby relation for said powered-up disk is re-established according to the group where said powered-up disk is currently located and a backup file is re-loaded on said powered-up disk.

10. An apparatus for performing a hot standby for multiple disks grouping in a distributed file system, comprising:
a pre-configuring unit, configured to grouping disks for a file access server and establishing a hot standby relation between disks in different gropus; the apparatus **characterized by** comprising:
a new disk detecting unit, (14,23) configured to judge whether a powered-up disk is a new disk, wherein if yes, it triggers a new disk hot standby relation determining unit, otherwise it triggers an old disk hot standby relation configuring unit;
said new disk hot standby relation determining unit (16,24), configured to determine the hot standby relation of said new disk according to the group where said new disk is located and load a backup file on said new disk; and
said old disk hot standby relation configuring unit, configured to configure the hot standby relation of said powered-up disk according to whether the group where said powered-up disk is currently located is consistent with a previous group,
wherein said old disk hot standby relation configuring unit includes:
a group judging subunit (25) configured to judge whether the group where said powered-up disk is currently located is consistent with the previous group, wherein if consistent, it triggers a hot standby relation restoration subunit, and if not consistent, it triggers a hot standby relation updating subunit (27);
said hot standby relation restoration subunit, configured to restore the previous hot standby relation of said powered-up disk and judge whether the file content of said powered-up disk is identical to the file content in its hot standby disk, wherein if identical, it does not perform any process, and if not identical, a backup file is re-loaded on said powered-up disk; and
said hot standby relation updating subunit (27), configured to re-establish hot standby relation for said powered-up disk according to the group where said powered-up disk is currently located and re-load a backup file on said powered-up disk.

## Patentansprüche

1. Verfahren zur Durchführung eines dauerbetriebenen Standby-Modus für mehrere Plattengruppen in einem verteilten Dateisystem, umfassend:
das Gruppieren von Platten für einen Dateizugriffsserver und Erstellen einer Standby-Beziehung zwischen Platten in verschiedenen Gruppen; wobei
das Verfahren **dadurch gekennzeichnet ist, dass** es Folgendes umfasst:
das Beurteilen, ob eine eingeschaltete Platte eine neue Platte ist, wenn festgestellt wird, dass die Platte eingeschaltet ist, wobei, wenn ja, die dauerbetriebene Standby-Beziehung der neuen Platte gemäß der Gruppe bestimmt wird, in der die neue Platte angeordnet ist, und eine Sicherungsdatei auf die neue Datei geladen wird;
wenn es keine neue Platte ist, das Beurteilen, ob die Gruppe, in der die eingeschaltete Platte gerade angeordnet ist, mit einer vorherigen Gruppe übereinstimmt, wobei, wenn übereinstimmend, die vorherige dauerbetriebene Standby-Beziehung der eingeschalteten Platte wieder hergestellt wird und beurteilt wird, ob der Dateninhalt der eingeschalteten Platte identisch mit dem Dateninhalt in ihrer dauerbetriebenen Standby-Platte ist, wobei, wenn identisch, kein Prozess ausgeführt wird, und, wenn nicht identisch, eine Sicherungsdatei auf die eingeschaltete Platte zurückgeladen wird; und
wenn nicht übereinstimmend, das Wiederherstellen der dauerbetriebenen Standby-Beziehung für die eingeschaltete Platte gemäß der Gruppe, in der die eingeschaltete Platte gerade angeordnet ist, und Rückladen einer Sicherungsdatei auf die eingeschaltete Platte.

2. Verfahren nach Anspruch 1, **dadurch gekennzeichnet, dass** das Gruppieren von Platten, indem ein Dateizugriffsserver als ein Objekt genommen wird, insbesondere wie folgt erfolgt:
Konfigurieren physischer Information der Position, logischer Einheitsinformation und von Gruppen-Zahleninformation für den Dateizugriffsserver und Erstellen der entsprechenden Beziehung zwischen Plattenparametern und der physischen Information der Position, logischen Einheitsinformation und von Gruppen-Zahleninformation des Dateizugriffsservers.

3. Verfahren nach Anspruch 2, **dadurch gekennzeichnet, dass** die physische Information der Position die Information von Bereich, Rahmen und Sockelplatte umfasst, wo der Dateizugriffsserver angeordnet ist; die logische Einheitsinformation die Information von CPU, Innenanschlusseinheit, Außenanschlusseinheit, MAC-Adresse und IP-Adresse des Dateizugriffsservers umfasst; die Plattenparameter einen Plattendatenbereich-Nutzungsidentifikator, eine logische Adressindexnummer der Platte in dem Dateizugriffsserver, eine physische Plattenseriennummer, einen logischen Plattenidentifikator, eine Plattenblock-Prüfabfrageseriennummer, die Platten-Heartbeatdetektion, den Plattenstatus, die Gesamtkapazität der Platte, die Leerkapazität der Platte, die während eines bestimmten Zeitraums von der Platte gelesene Datenmenge, die während eine bestimmten Zeitraums auf die Platte geschriebene Datenmenge, die Berichtstartzeit und die Berichtendzeit umfassen.

4. Verfahren nach Anspruch 1, **dadurch gekennzeichnet, dass** das Erstellen der dauerbetriebenen Standby-Beziehung, indem eine Gruppe als ein Objekt genommen wird, insbesondere umfasst:
das Festlegen von dauerbetriebenen Standby-Nummern für die Platten in der Gruppe und das Erstellen der entsprechenden dynamischen Beziehung unter den Platten in der Gruppe gemäß den dauerbetriebenen Standby-Nummern.

5. Vorrichtung zur Durchführung eines dauerbetriebenen Standby für mehrere Platten in einem verteilten Dateisystem, wobei die Vorrichtung **dadurch gekennzeichnet ist, dass** sie Folgendes umfasst:
eine Plattengruppierungseinheit (20), konfiguriert zum Gruppieren von Platten für einen Dateizugriffsserver;
eine statische Konfigurationseinheit (21) für dauerbetriebene Standby-Beziehung, konfiguriert zum Erstellen einer dauerbetriebenen Standby-Beziehung zwischen Platten in verschiedenen Gruppen;
eine Überwachungseinheit (22), konfiguriert zum Überwachen des Aktualisierungsstatus der Platten;
eine Detektionseinheit (14, 23) für neue Platte, konfiguriert zum Beurteilen, ob eine eingeschaltete Platte eine neue Platte ist, wobei, wenn ja, sie eine Bestimmungseinheit (16, 24) für dauerbetriebene Standby-Beziehung für eine neue Platte auslöst, andernfalls sie eine Gruppenbeurteilungseinheit (25) auslöst;
die Bestimmungseinheit (16, 24) für dauerbetriebene Standby-Beziehung für eine neue Platte, konfiguriert zum Bestimmen der dauerbetriebenen Standby-Beziehung der neuen Platte gemäß der Gruppe, in der die neue Platte angeordnet ist, und zum Auslösen einer Sicherungsdatei-Ladeeinheit (28);
eine Gruppenbeurteilungseinheit (25), konfiguriert zum Beurteilen, ob die Gruppe, in der die eingeschaltete Platte gerade angeordnet ist, mit der vorherigen Gruppe übereinstimmt, wobei, wenn übereinstimmend, sie eine Wiederherstellungs- und Dateünhaltbeurteilungseinheit (26) für dauerbetriebene Standby-Beziehung auslöst, und, wenn nicht übereinstimmend, sie eine Aktualisierungseinheit (27) für dauerbetriebene Standby-Beziehung auslöst;
die Wiederherstellungs- und Dateünhaltbeurteilungseinheit (26) für dauerbetriebene Standby-Beziehung, konfiguriert zum Wiederherstellen der vorherigen dauerbetriebenen Standby-Beziehung der eingeschalteten Platte und zum Beurteilen, ob der Dateninhalt der Platte mit dem Dateninhalt in ihrer dauerbetriebenen Standby-Plate ist, wobei, wenn identisch, sie keinen Prozess ausführt, und, wenn nicht identisch, sie die Sicherungsdatei-Ladeeinheit auslöst;
die Aktualisierungseinheit (27) für dauerbetriebene Standby-Beziehung, konfiguriert zur Wiederherstellung der dauerbetriebenen Standby-Beziehung gemäß der Gruppe, in der die eingeschaltete Platte gerade angeordnet ist, und zum Auslösen einer Sicherungsdatei-Ladeeinheit (28); und
die Sicherungsdatei-Ladeeinheit (28), konfiguriert zum Laden einer Sicherungsdatei auf die eingeschaltete Platte.

6. Vorrichtung nach Anspruch 5, **dadurch gekennzeichnet, dass** die Plattengruppierungseinheit, welche Platten gruppiert, indem ein Dateizugriffsserver als ein Objekt genommen wird, insbesondere:
physische Information der Position, logische Einheitsinformation und Gruppen-Zahleninformation für den Dateizugriffsserver konfiguriert und die entsprechende Beziehung zwischen Plattenparametern und der physischen Information der Position, der logischen Einheitsinformation und der Gruppen-Zahleninformation des Dateizugriffsservers erstellt.

7. Vorrichtung nach Anspruch 6, **dadurch gekennzeichnet, dass** die physische Information der Position die Information von Bereich, Rahmen und Sockelplatte umfasst, wo der Dateizugriffsserver angeordnet ist; die logische Einheitsinformation die Information von CPU, Innenanschlusseinheit, Außenanschlusseinheit, MAC-Adresse und IP-Adresse des Dateizugriffsservers umfasst; die Plattenparameter einen Plattendatenbereich-Nutzungsidentifikator, eine logische Adressindexnummer der Platte in dem Dateizugriffsserver, eine physische Plattenseriennummer, einen logischen Plattenidentifikator, eine Plattenblock-Prüfabfrageseriennummer, die Platten-Heartbeatdetektion, den Plattenstatus, die Gesamtkapazität der Platte, die Leerkapazität der Platte, die während eines bestimmten Zeitraums von der Platte gelesene Datenmenge, die während eine bestimmten Zeitraums auf die Platte geschriebene Datenmenge, die Berichtstartzeit und die Berichtendzeit umfassen.

8. Vorrichtung nach Anspruch 5, **dadurch gekennzeichnet, dass** die statische Konfigurationseinheit für dauerbetriebene Standby-Beziehung, die eine dauerbetriebene Standby-Beziehung unter Platten erstellt, indem eine Gruppe als ein Objekt genommen wird, insbesondere:
dauerbetriebene Standby-Nummern für die Platten in der Gruppe festlegt und entsprechende dynamische Beziehung unter den Platten in der Gruppe gemäß den dauerbetriebenen Standby-Nummern erstellt.

9. Verfahren zur Durchführung eines dauerbetriebenen Standby für mehrere Plattengruppen in einem verteilten Dateisystem, umfassend:
das Gruppieren von Platten für einen Dateizugriffsserver und Erstellen einer dauerbetriebenen Standby-Beziehung zwischen Platten in verschiedenen Gruppen; wobei das Verfahren **dadurch gekennzeichnet ist, dass** es Folgendes umfasst:
das Beurteilen, ob eine eingeschaltete Platte eine neue Platte ist, wobei, wenn ja, die dauerbetriebene Standby-Beziehung der neuen Platte gemäß der Gruppe, in der die neue Platte angeordnet ist, bestimmt wird, und eine Sicherungsdatei auf die neue Platte geladen wird, andernfalls die dauerbetriebene Standby-Beziehung der eingeschalteten Platte konfiguriert wird, je nachdem, ob die Gruppe, in der die eingeschaltete Platte gerade angeordnet ist, mit einer vorherigen Gruppe übereinstimmt,
wobei, falls die eingeschaltete Platte keine neue Platte ist, der Schritt des Konfigurierens der dauerbetriebenen Standby-Beziehung der eingeschalteten Platte, je nachdem, ob die Gruppe, in der die eingeschaltete Platte gerade angeordnet ist, mit der vorherigen Gruppe übereinstimmt, Folgendes umfasst:
falls die Gruppe, in der die eingeschaltete Platte angeordnet ist, mit der vorherigen Gruppe übereinstimmt, die vorherige dauerbetriebene Standby-Beziehung der eingeschalteten Platte wiederhergestellt wird und beurteilt wird, ob der Dateninhalt der eingeschalteten Platte mit dem Dateninhalt in ihrer dauerbetriebenen Standby-Platte identisch ist, wobei, wenn identisch, kein Prozess durchgeführt wird, und wenn nicht identisch eine Sicherungsdatei auf die eingeschaltete Platte zurückgeladen wird; und
falls die Gruppe, in der die eingeschaltete Platte gerade angeordnet ist, nicht mit der vorherigen Gruppe übereinstimmt, die dauerbetriebene Standby-Beziehung für die eingeschaltete Platte gemäß der Gruppe, in der die eingeschaltete Platte gerade angeordnet ist, wiederhergestellt wird, und eine Sicherungsdatei auf die eingeschaltete Platte zurückgeladen wird.

10. Vorrichtung zur Durchführung eines dauerbetriebenen Standby für mehrere Plattengruppen in einem verteilten Dateisystem, umfassend:
eine Vorkonfigurationseinheit, konfiguriert zum Gruppieren von Platten für einen Dateizugriffsserver und Erstellen einer dauerbetriebenen Standby-Beziehung zwischen Platten in verschiedenen Gruppen; wobei die Vorrichtung **dadurch gekennzeichnet ist, dass** sie Folgendes umfasst:
eine Detektionseinheit (14, 23) für eine neue Platte, konfiguriert zum Beurteilen, ob eine eingeschaltete Platte eine neue Platte ist, wobei, wenn ja, sie eine Bestimmungseinheit für eine dauerbetriebene Standby-Beziehung für eine neue Platte auslöst, andernfalls sie eine Konfigurationseinheit für dauerbetriebene Standby-Beziehung für eine alte Platte auslöst;
die Bestimmungseinheit (16, 24) für dauerbetriebene Standby-Beziehung für eine neue Platte, konfiguriert zum Bestimmen der dauerbetriebenen Standby-Beziehung der neuen Platte gemäß der Gruppe, in der die neue Platte angeordnet ist, und Laden einer Sicherungsdatei auf die neue Platte; und
die Konfigurationseinheit für dauerbetriebene Standby-Beziehung für eine alte Platte, konfiguriert zum Konfigurieren der dauerbetriebenen Standby-Beziehung der eingeschalteten Platte, je nachdem, ob die Gruppe, in der die eingeschaltete Platte gerade angeordnet ist, mit einer vorherigen Gruppe übereinstimmt;
wobei die Konfigurationseinheit für dauerbetriebene Standby-Beziehung für eine alte Platte Folgendes umfasst:
eine Gruppenbeurteilungs-Untereinheit (25), konfiguriert zum Beurteilen, ob die Gruppe, in der die eingeschaltete Platte gerade angeordnet ist, mit der vorherigen Gruppe übereinstimmt, wobei, wenn übereinstimmend, sie eine Wiederherstellungs-Untereinheit für dauerbetriebene Standby-Beziehung auslöst, und, wenn nicht übereinstimmend, sie eine Aktualisierungs-Untereinheit (27) für dauerbetriebene Standby-Beziehung auslöst;
die Wiederherstellungs-Untereinheit für dauerbetriebene Standby-Beziehung, konfiguriert zum Wiederherstellen der vorherigen dauerbetriebenen Standby-Beziehung der eingeschalteten Platte und zum Beurteilen, ob der Dateninhalt der eingeschalteten Platte mit dem Dateninhalt in ihrer dauerbetriebenen Standby-Platte identisch ist, wobei, wenn identisch, sie keinen Prozess ausführt, und, wenn nicht identisch, eine Sicherungsdatei auf die eingeschaltete Platte zurückgeladen wird; und
die Aktualisierungs-Untereinheit (27) für dauerbetriebene Standby-Beziehung, konfiguriert zum Wiederherstellen der dauerbetriebenen Standby-Beziehung für die eingeschaltete Platte gemäß der Gruppe, in der die eingeschaltete Platte gerade angeordnet ist, und Rückladen einer Sicherungsdatei auf die eingeschaltete Platte.

## Revendications

1. Procédé pour effectuer une réserve immédiate pour un groupement de multiples disques dans un système de fichiers répartis, comprenant :
le groupement de disques pour un serveur d'accès aux fichiers et l'établissement d'une relation de réserve entre les disques dans différents groupes ;
le procédé étant **caractérisé en ce qu'**il comprend :
le jugement du fait qu'un disque mis sous tension est un nouveau disque lors de la détection que le disque est mis sous tension, dans lequel, si c'est le cas, la relation de réserve immédiate dudit nouveau disque est déterminée en fonction du groupe dans lequel ledit nouveau disque est situé et un fichier de sauvegarde est chargé sur ledit nouveau disque ;
si ce n'est pas un nouveau disque, le jugement du fait que le groupe dans lequel ledit disque mis sous tension est actuellement situé est cohérent avec un groupe précédent, dans lequel, s'il est cohérent, la relation de réserve immédiate précédente dudit disque mis sous tension est rétablie et il est jugé si le contenu de fichier dudit disque mis sous tension est identique au contenu de fichier dans son disque de réserve immédiate, dans lequel, s'il est identique, aucun processus n'est effectué, et s'il n'est pas identique, un fichier de sauvegarde est chargé de nouveau sur ledit disque mis sous tension ; et
s'il n'est pas cohérent, l'établissement de nouveau d'une relation de réserve immédiate pour ledit disque mis sous tension en fonction du groupe dans lequel ledit disque mis sous tension est actuellement situé, et le chargement de nouveau d'un fichier de sauvegarde sur ledit disque mis sous tension.

2. Procédé selon la revendication 1, **caractérisé en ce qu'**un groupement de disques en prenant un serveur d' accès aux fichiers en tant qu'objet en particulier comprend :
la configuration des informations physiques de la position, des informations d'unité logique et des informations de numéro de groupement pour ledit serveur d'accès aux fichiers et l'établissement de la relation correspondante entre des paramètres de disque et les informations physiques de la position, les informations d'unité logique et les informations de numéro de groupement dudit serveur d'accès aux fichiers.

3. Procédé selon la revendication 2, **caractérisé en ce que** lesdites informations physiques de la position comprennent les informations de la console, du bâti et de la plaque de support où ledit serveur d'accès aux fichiers est situé ; lesdites informations d'unité logique comprennent les informations de l'unité centrale, de l'unité de port intérieur, de l'unité de port extérieur, de l'adresse MAC et de l'adresse IP dudit serveur d'accès aux fichiers ; lesdits paramètres de disque comprennent un identifiant d'utilisation de zone de données du disque, un numéro d'index d'adresse logique du disque dans ledit serveur d'accès aux fichiers, un numéro de série physique du disque, un identifiant logique du disque, un numéro de série d'interrogation de contrôle de bloc du disque, la détection du battement du disque, l'état du disque, la capacité totale du disque, la capacité libre du disque, la quantité de données lues sur le disque pendant une certaine période de temps, la quantité de données écrites sur le disque pendant une certaine période de temps, l'instant de début de rapport et l'instant de fin de rapport.

4. Procédé selon la revendication 1, **caractérisé en ce que** l'établissement de la relation de réserve immédiate entre des disques en prenant un groupe en tant qu'objet en particulier consiste en :
l'établissement de numéros de réserve immédiate pour les disques dans ledit groupe et l'établissement de la relation correspondante dynamique entre les disques dans le groupe en fonction desdits numéros de réserve immédiate.

5. Appareil pour effectuer une réserve immédiate pour un groupement de multiples disques dans un système de fichiers répartis, comprenant :
l'appareil **caractérisé en ce qu'**il comprend :
une unité de groupement de disques (20), configurée pour grouper des disques pour un serveur d'accès aux fichiers ;
une unité de configuration statique de relation de réserve immédiate (21), configurée pour établir une relation de réserve immédiate entre les disques dans différents groupes ;
une unité de surveillance (22), configurée pour surveiller l'état de mise à jour des disques ;
une unité de détection de nouveau disque (14, 23), configurée pour juger si un disque mis sous tension est un nouveau disque, dans lequel, si c'est le cas, elle déclenche une unité de détermination de relation de réserve immédiate de nouveau disque (16, 24), autrement, elle déclenche une unité de jugement de groupe (25) ;
l'unité de détermination de relation de réserve immédiate de nouveau disque (16, 24), configurée pour déterminer la relation de réserve immédiate dudit nouveau disque en fonction du groupe dans lequel ledit nouveau disque est situé et pour déclencher une unité de chargement de fichier de sauvegarde (28) ;
l'unité de jugement de groupe (25), configurée pour juger si le groupe dans lequel ledit disque mis sous tension est actuellement situé est cohérent avec le groupe précédent, dans lequel, s'il est cohérent, elle déclenche une unité de restauration de relation de réserve immédiate et de jugement de contenu de fichier (26), et s'il n'est pas cohérent, elle déclenche une unité de mise à jour de relation de réserve immédiate (27),
l'unité de restauration de relation de réserve immédiate et de jugement de contenu de fichier (26), configurée pour restaurer la relation de réserve immédiate précédente dudit disque mis sous tension et juger si le contenu de fichier dudit disque mis sous tension est identique au contenu de fichier sur son disque de réserve immédiate, dans lequel, s'il est identique, elle n'effectue aucun processus, et s'il n'est pas identique, elle déclenche l'unité de chargement de fichier de sauvegarde ;
l'unité de mise à jour de relation de réserve immédiate (27), configurée pour établir de nouveau une relation de réserve immédiate pour ledit disque mis sous tension en fonction du groupe dans lequel ledit disque mis sous tension est actuellement situé, et déclencher une unité de chargement de fichier de sauvegarde (28), et
l'unité de chargement de fichier de sauvegarde (28), configurée pour charger un fichier de sauvegarde sur ledit disque mis sous tension.

6. Appareil selon la revendication 5, **caractérisé en ce que** ladite unité de groupement de disques groupant des disques en prenant un serveur d'accès aux fichiers en tant qu'objet en particulier :
configure les informations physiques de la position, les informations d'unité logique et les informations de numéro de groupement pour ledit serveur d'accès aux fichiers et établit la relation correspondante entre les paramètres de disque et les informations physiques de la position, les informations d'unité logique et les informations de numéro de groupement dudit serveur d'accès aux fichiers.

7. Appareil selon la revendication 6, **caractérisé en ce que** lesdites informations physiques de la position comprennent les informations de la console, du bâti et de la plaque de support où ledit serveur d'accès aux fichiers est situé ; lesdites informations d'unité logique comprennent les informations de l'unité centrale, de l'unité de port intérieur, de l'unité de port extérieur, de l'adresse MAC et de l'adresse IP dudit serveur d'accès aux fichiers ; lesdits paramètres de disque comprennent un identifiant d'utilisation de zone de données du disque, un numéro d'index d'adresse logique du disque dans ledit serveur d'accès aux fichiers, un numéro de série physique du disque, un identifiant logique du disque, un numéro de série d'interrogation de contrôle de bloc du disque, la détection du battement du disque, l'état du disque, la capacité totale du disque, la capacité libre du disque, la quantité de données lues sur le disque pendant une certaine période de temps, la quantité de données écrites sur le disque pendant une certaine période de temps, l'instant de début de rapport, et l'instant de fin de rapport.

8. Appareil selon la revendication 5, **caractérisé en ce que** ladite unité de configuration statique de relation de réserve immédiate établissant une relation de réserve immédiate entre des disques en prenant un groupe en tant qu'objet en particulier :
établit des numéros de réserve immédiate pour les disques dans ledit groupe et établit la relation correspondante dynamique entre les disques dans le groupe en fonction desdits numéros de réserve immédiate.

9. Procédé pour effectuer une réserve immédiate pour un groupement de multiples disques dans un système de fichiers répartis, comprenant :
le groupement de disques pour un serveur d'accès aux fichiers et l'établissement d'une relation de réserve immédiate entre les disques dans différents groupes ; et
le procédé étant **caractérisé en ce qu'**il comprend :
le jugement du fait qu'un disque mis sous tension est un nouveau disque, dans lequel, si c'est le cas, la relation de réserve immédiate dudit nouveau disque est déterminée en fonction du groupe dans lequel ledit nouveau disque est situé et un fichier de sauvegarde est chargé sur ledit nouveau disque, autrement la relation de réserve immédiate dudit disque mis sous tension est configurée selon que le groupe dans lequel ledit disque mis sous tension est actuellement situé est cohérent ou non avec un groupe précédent,
dans lequel, dans le cas où ledit disque mis sous tension n'est pas un nouveau disque, l'étape de configuration de la relation de réserve immédiate dudit disque mis sous tension selon que le groupe dans lequel ledit disque mis sous tension est actuellement situé est cohérent ou non avec le groupe précédent consiste **en ce que** :
dans le cas où le groupe dans lequel ledit disque mis sous tension est situé est cohérent avec le groupe précédent, la relation de réserve immédiate précédente dudit disque mis sous tension est restaurée et il est jugé si le contenu de fichier dudit disque mis sous tension est identique ou non au contenu de fichier sur son disque de réserve immédiate, dans lequel, s'il est identique, aucun processus n'est effectué, et s'il n'est pas identique, un fichier de sauvegarde est chargé de nouveau sur ledit disque mis sous tension ; et
dans le cas où le groupe dans lequel ledit disque mis sous tension est actuellement situé n'est pas cohérent avec le groupe précédent, une relation de réserve immédiate pour ledit disque mis sous tension est établie de nouveau en fonction du groupe dans lequel ledit disque mis sous tension est actuellement situé et un fichier de sauvegarde est chargé de nouveau sur ledit disque mis sous tension.

10. Appareil pour effectuer une réserve immédiate pour un groupement de multiples disques dans un système de fichiers répartis, comprenant :
une unité de préconfiguration, configurée pour grouper des disques pour un serveur d'accès aux fichiers et établir une relation de réserve immédiate entre les disques dans différents groupes ;
l'appareil étant **caractérisé en ce qu'**il comprend :
une unité de détection de nouveau disque (14, 23) configurée pour juger si un disque mis sous tension est un nouveau disque, dans lequel, si c'est le cas, elle déclenche une unité de détermination de relation de réserve immédiate de nouveau disque, autrement elle déclenche une unité de configuration de relation de réserve immédiate d'ancien disque ;
ladite unité de détermination de relation de réserve immédiate de nouveau disque (16, 24), configurée pour déterminer la relation de réserve immédiate dudit nouveau disque en fonction du groupe dans lequel ledit nouveau disque est situé et charger un fichier de sauvegarde sur ledit nouveau disque ; et
ladite unité de configuration de relation de réserve immédiate d'ancien disque, configurée pour configurer la relation de réserve immédiate dudit disque mis sous tension selon que le groupe dans lequel ledit disque mis sous tension est actuellement situé est cohérent ou non avec un groupe précédent,
dans lequel ladite unité de configuration de relation de réserve immédiate d'ancien disque comprend :
une sous-unité de jugement de groupe (25), configurée pour juger si le groupe dans lequel ledit disque mis sous tension est actuellement situé est cohérent ou non avec le groupe précédent, dans lequel, s'il est cohérent, elle déclenche une sous-unité de restauration de relation de réserve immédiate, et s'il n'est pas cohérent, elle déclenche une sous-unité de mise à jour de relation de réserve immédiate (27) ;
ladite sous-unité de restauration de relation de réserve immédiate, configurée pour restaurer la relation de réserve immédiate précédente dudit disque mis sous tension et juger si le contenu de fichier dudit disque mis sous tension est identique au contenu de fichier sur son disque de réserve immédiate, dans lequel, s'il est identique, aucun processus n'est effectué, et s'il n'est pas identique, un fichier de sauvegarde est chargé de nouveau sur ledit disque mis sous tension ; et
ladite sous-unité de mise à jour de relation de réserve immédiate (27), configurée pour établir de nouveau une relation de réserve immédiate pour ledit disque mis sous tension en fonction du groupe dans lequel ledit disque mis sous tension est actuellement situé et charger de nouveau un fichier de sauvegarde sur ledit disque mis sous tension.
